# FASCICULE DE BREVET EUROPEEN

(11) **EP 0 992 152 B1**
(45) Date de publication et mention de la délivrance du brevet: **05.09.2001**
(21) Numéro de dépôt: 98929485.5
(22) Date de dépôt: 04.06.1998
(51) Int. Cl.: H04N 1/00

(54) **PROCEDE DE TRANSMISSION ECONOMIQUE DE TELECOPIE ET TELECOPIEUR POUR LA MISE EN OEUVRE DU PROCEDE**
VERFAHREN ZUR WIRTSCHAFTLICHEN FACSIMILEÜBERTRAGUNG UND FACSIMILEGERÄT ZUR IMPLEMENTIERUNG DERSELBEN
METHOD FOR ECONOMICAL FAX TRANSMISSION AND FAX MACHINE FOR IMPLEMENTING THE METHOD

(30) Priorité: 27.06.1997 FR 9708102; 19.09.1997 FR 9711687
(43) Date de publication de la demande: 12.04.2000
(73) Titulaire: SAGEM SA, 75116 Paris (FR)
(72) Inventeur: CAZIN, Dominique, F-92150 Suresnes (FR)
(74) Mandataire: Bloch, Gérard
(86) Numéro de dépôt international: FR9801133
(87) Numéro de publication internationale: WO9900972

(56) Documents cités:
- EP-A- 0 615 377
- WO-A-96/41463
- WO-A-97/18665
- WO-A-97/23082
- NL-C- 1 004 167
- PATENT ABSTRACTS OF JAPAN vol. 018, no. 318 (E-1562), 16 juin 1994 & JP 06 069955 A (KAWASAKI STEEL CORP), 11 mars 1994
- GRONERT E: "KOSTEN SPAREN MIT FAX-LOSUNGEN IM LAN" FUNKSCHAU, vol. 68, no. 2, 5 janvier 1996, page 62/63 XP000554685

## Description

En téléphonie, la transmission d'une télécopie entre deux télécopieurs distants se fait généralement à travers un réseau de communication téléphonique ordinaire tel que le réseau RTC (Réseau Téléphonique Commuté), le réseau RNIS (Réseau Numérique à Intégration de Services) ou encore à titre d'exemple le réseau de radiotéléphonie GSM.

Le coût de la transmission de la télécopie est par conséquent égal au coût de l'appel téléphonique entre les deux télécopieurs distants, ce coût pouvant être élevé pour les appels à grande distance ou de longue durée.

Afin de réduire ce coût, une solution consiste à transmettre la télécopie à travers un réseau de transmission plus économique que les réseaux de communication ordinaires (RTC, RNIS, etc.), par exemple à travers le réseau de l'Internet.

Les utilisateurs de l'Internet sont généralement reliés au réseau par l'intermédiaire d'un fournisseur de services disposant d'une mémoire de grande capacité et attribuant à chacun de ses clients une fraction de cette mémoire.

Chaque utilisateur peut ainsi recevoir et stocker dans la fraction de mémoire qui lui est attribuée des messages, pouvant notamment contenir des télécopies, transmis via l'Internet depuis un utilisateur distant. La fraction de mémoire de l'utilisateur fait ainsi office de boîte à messages que l'utilisateur peut consulter en appelant son fournisseur de services afin de prendre connaissance de la présence et du contenu de messages reçus.

Pour la consultation ou l'émission de messages, le client ne paie, outre le prix du service global, que le coût de la communication avec le fournisseur de services, généralement une communication locale via le réseau téléphonique ordinaire.

La messagerie du réseau de l'Internet permet donc de transmettre des télécopies à un coût économique. Cependant, la réception des messages n'est pas directe : l'utilisateur doit consulter volontairement sa boîte à messages pour s'informer de la présence de messages et de leur contenu.

Pour pallier cet inconvénient, certains fournisseurs de services proposent de transmettre d'office à leurs clients les télécopies reçues dans les boîtes à messages. Mais un tel service est payant.

Certains télécopieurs sont pourvus de moyens de scrutation automatique et périodique de leur boîte à messages. Une telle solution n'est cependant pas pleinement satisfaisante car elle nécessite de nombreux appels inutiles au fournisseur, et la réception de la télécopie par l'abonné est de toute façon plus ou moins différée selon la fréquence de ces appels.

L'invention vise à résoudre ces difficultés.

A cet effet, l'invention concerne un procédé de transmission de télécopie entre deux télécopieurs distants dans lequel on relie chaque télécopieur à au moins un réseau de transmission à travers lequel on transmet la télécopie, caractérisé par le fait que l'on relie chaque télécopieur à un réseau de transmission directe et à un réseau de transmission indirecte économique et on transmet de l'un vers l'autre des télécopieurs ladite télécopie et un avertissement de transmission de ladite télécopie respectivement à travers le réseau de transmission indirecte et à travers le réseau de transmission directe.

Grâce à cela, le télécopieur auquel est destinée la télécopie transmise est averti directement de cette transmission, par une courte communication en temps réel entre les deux télécopieurs distants via le réseau de transmission directe.

Avantageusement, côté réception, après réception de l'avertissement, on consulte des moyens intermédiaires de transmission de télécopie afin de vérifier si la télécopie annoncée a été reçue dans les moyens intermédiaires de transmission.

Ainsi, on ne scrute les moyens intermédiaires de transmission qu'en cas de réception d'une télécopie.

Avantageusement encore, côté réception, après réception de la télécopie annoncée dans les moyens intermédiaires de transmission, on transfère ladite télécopie des moyens intermédiaires de transmission au télécopieur.

Il peut également être prévu que, côté réception, après réception de la télécopie annoncée, on stocke ladite télécopie dans les moyens intermédiaires de transmission.

Dans une forme de réalisation perfectionnée de l'invention, côté réception, après réception de la télécopie annoncée, on émet un compte-rendu de réception de ladite télécopie vers le télécopieur d'émission à travers le réseau de transmission indirecte.

De préférence encore, côté émission, après émission de la télécopie, on consulte des moyens intermédiaires de transmission afin de s'assurer de la réception dudit compte-rendu.

Grâce à cela, on vérifie la bonne réception de la télécopie.

L'invention concerne aussi un télécopieur pour la mise en oeuvre du procédé ci-dessus, caractérisé par le fait qu'il comprend un bloc de réception pourvu de moyens de réception d'un avertissement de transmission de télécopie reliés à un réseau de transmission directe et de moyens de consultation de moyens intermédiaires de transmission reliés à un réseau de transmission indirecte, et un bloc d'émission, pour émettre vers un télécopieur distant des avertissements de transmission de télécopie et lesdites télécopies annoncées, relié au réseau de transmission directe et au réseau de transmission indirecte.

Avantageusement, le bloc de réception est agencé pour récupérer chaque télécopie reçue dans les moyens intermédiaires de transmission.

Avantageusement encore, le bloc de réception est agencé pour émettre un compte-rendu de réception de télécopie vers le télécopieur d'émission de la télécopie annoncée, à travers le réseau de transmission indirecte.

L'invention sera mieux comprise à l'aide de la description suivante d'un mode de réalisation particulier du procédé de transmission de télécopie entre deux télécopieurs distants et d'une forme de réalisation particulière de deux télécopieurs pour la mise en oeuvre du procédé, en référence en dessin annexé, sur lequel :

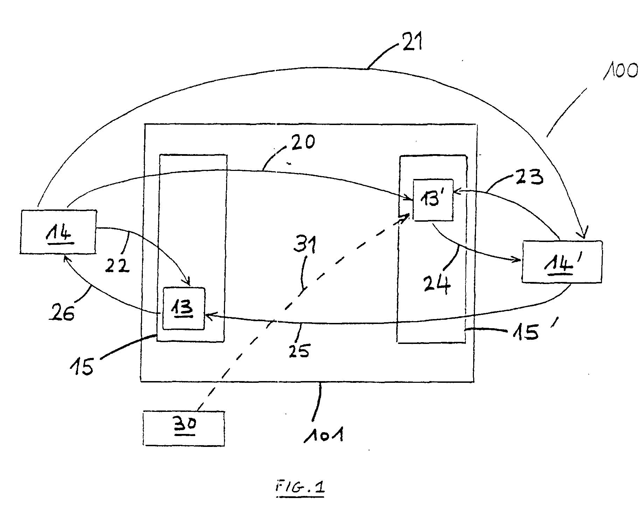

- la figure 1 représente un schéma des différentes étapes du mode de réalisation particulier du procédé de l'invention et

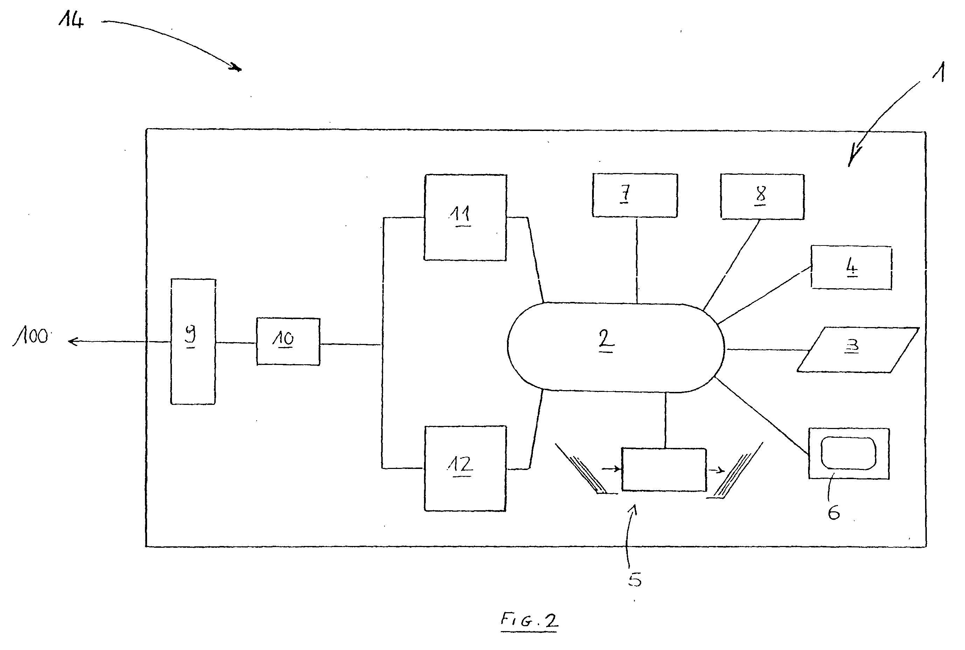

- la figure 2 représente un schéma bloc fonctionnel de l'un des télécopieurs pour la mise en oeuvre du procédé de la figure 1.

Le procédé de transmission de télécopie de l'invention est destiné à transmettre une télécopie entre deux télécopieurs distants 14, 14' via un réseau de transmission, en l'espèce le réseau de l'Internet 101.

Les deux télécopieurs étant identiques, l'un seul des deux va maintenant être décrit. Par souci de clarté, les éléments correspondants des deux télécopieurs 14, 14' portent les mêmes références respectivement non primées et primées.

Le télécopieur 14 comprend un bloc de télécopie ordinaire 1 comportant des éléments classiques de télécopieur : une unité de contrôle 2 à laquelle sont reliés un clavier de saisie 3, un analyseur d'image 4, une imprimante 5, un écran de visualisation 6, une mémoire de télécopie 7 et une mémoire d'appel 8 contenant des numéros de téléphone et des adresses électroniques. Le clavier de saisie 3 est ici un clavier perfectionné, comportant des touches pour les lettres de l'alphabet et des touches de caractères spéciaux pour introduire des adresses électroniques du réseau de l'Internet et pour éditer des messages à transmettre via le réseau de l'Internet, comme cela sera explicité par la suite.

L'unité de contrôle 2 comporte un logiciel d'édition pour créer une télécopie à l'aide du clavier de saisie 3 et de l'écran de visualisation 6.

Le télécopieur 14 est pourvu d'une interface ligne 9 de liaison à un réseau de communication directe, en l'espèce le réseau téléphonique commuté (RTC) 100, ici connectée à un modem 10.

Le télécopieur pourrait également comprendre une autre interface ligne de liaison à un réseau local, du type réseau d'entreprise, relié en permanence au réseau de l'Internet.

Le télécopieur 14 intègre en outre un bloc d'émission 11 et un bloc de réception 12, reliés l'un et l'autre au modem 10 et à l'unité de contrôle 2.

Le bloc d'émission 11 comprend une unité d'exécution commandée par l'unité de contrôle 2, comportant un logiciel permettant d'exécuter un protocole d'émission de télécopie vers un télécopieur distant. Les différentes étapes du protocole d'émission seront explicitées dans la description du procédé de transmission.

Le bloc de réception 12 comprend également une unité d'exécution commandée par l'unité de contrôle 2, comportant un logiciel permettant d'exécuter un protocole de réception de télécopie, explicité par la suite.

Le télécopieur 14 est en outre relié, via le réseau RTC, à un centre de connexion au réseau de l'Internet 101, en l'espèce à un fournisseur de services 15.

Le télécopieur 14 dispose, auprès de son fournisseur de services, d'une mémoire externe 13, appelée par la suite "boîte à messages", constituée par une fraction de mémoire de grande capacité du fournisseur de services 15. La boîte à messages 13 a pour attribut une adresse électronique sur le réseau de l'Internet 101.

La boîte à messages 13 peut recevoir et contenir une pluralité de messages transmis à travers le réseau de l'Internet 101 par des utilisateurs distants et notamment des télécopieurs du type de la présente description, ayant émis leur message vers l'adresse électronique de la boîte à messages 13.

Chaque message comprend une page de garde, et éventuellement des pièces jointes.

La page de garde contient des informations concernant l'adresse électronique de provenance et l'adresse électronique de destination du message, un texte de message et un témoin indiquant la présence de pièces jointes, le cas échéant.

Une pièce jointe peut notamment être constituée par un document de télécopie.

Le procédé de transmission de télécopie entre les deux télécopieurs 14, 14' correspondant au fonctionnement des télécopieurs 14, 14' va maintenant être décrit.

Côté émission 14, on crée un document de télécopie à émettre par analyse du document à l'aide de l'analyseur d'image 4 du télécopieur 14, ou à l'aide du logiciel d'édition.

Puis on crée un message destiné à être transmis via le réseau de l'Internet 101, en saisissant au clavier 3 les adresses électroniques des boîtes à messages de provenance et de destination du message, un texte de message et en annexant au message une pièce jointe constituée par le document de télécopie.

Enfin, on saisit au clavier 3 le numéro d'appel, sur le réseau RTC, du télécopieur de destination 14' auquel est associée la boîte à messages de destination 13'.

L'unité de contrôle 2 du télécopieur d'émission 14 commande alors l'exécution du protocole d'émission par le bloc d'émission 11.

Une première étape du protocole d'émission consiste à appeler le fournisseur de services 15 du télécopieur d'émission à l'aide de données stockées dans la mémoire d'appel 8. Après l'établissement de la communication, le bloc d'émission 11 du télécopieur 14 transmet à travers le réseau RTC 100 le message créé contenant la télécopie vers le fournisseur de services 15 qui se charge de transmettre le message 20 à travers le réseau de l'Internet 101, vers la boîte à messages de destination 13' à l'adresse électronique de destination fournie. Le message est alors transmis vers la boîte à messages de destination 13', via le réseau de l'Internet.

Une seconde étape du protocole consiste à appeler le télécopieur de destination 14' à son numéro d'appel du réseau RTC 100, en exécutant un protocole classique d'échange entre deux télécopieurs distants pour établir la communication. La communication étant établie, le télécopieur d'émission 14 transmet (21) directement vers le télécopieur de destination 14', à travers le réseau RTC, un avertissement constitué par un signal déterminé destiné à avertir le télécopieur de destination 14' de l'émission du message vers sa boîte à messages 13' à travers le réseau de l'Internet 101.

Enfin, dans une troisième étape du protocole, le télécopieur d'émission 14 scrute (22) sa boîte à messages 13, en opérant ici une succession d'appels périodiques à son fournisseur 15 et en consultant sa boîte à messages 13 à chaque appel, jusqu'à trouver un compte-rendu de réception, comme explicité plus loin.

Côté réception, le télécopieur de destination 14', ou de réception, appelé par le télécopieur d'émission 14 et ayant établi la communication avec celui-ci, reçoit (21) directement par le réseau RTC 100 l'avertissement d'émission du message de télécopie.

Sous la commande de l'avertissement reçu, l'unité de contrôle 2' du télécopieur de réception 14' commande au bloc de réception 12' l'exécution de son protocole de réception.

Dans une première étape du protocole de réception, le bloc de réception 12' scrute (23), ici périodiquement, la boîte à messages de destination 13', autrement dit la boîte à messages du télécopieur de réception 14', afin de vérifier si la télécopie annoncée a été reçue dans la boîte à messages 13'.

Lorsqu'au cours d'une scrutation le bloc de réception 12' trouve le message de télécopie annoncé dans la boîte à messages 13', il récupère le message en le transférant (24) de la boîte à messages 13' au télécopieur de réception 14'. Dans le télécopieur 14', le message contenant une page de garde et le document de télécopie est imprimé sur papier.

Au lieu d'imprimer ce message contenant la télécopie, on pourrait également envisager de le stocker dans la mémoire de télécopie 7' du télécopieur 14'.

On soulignera ici que la transmission de la télécopie s'effectue indirectement par l'intermédiaire de la boîte à messages 13' qui reçoit et stocke temporairement la télécopie avant récupération de la télécopie par le télécopieur de réception 14', le réseau de l'Internet constituant ainsi un réseau de transmission indirecte.

Une dernière étape du protocole de réception consiste, après réception de la télécopie, à émettre un compte-rendu de réception de la télécopie (25), via le réseau de l'Internet 101, vers la boîte à messages 13 du télécopieur d'émission 14 à l'adresse électronique de provenance indiquée dans le message reçu.

Côté émission, le compte-rendu est reçu et stocké dans la boîte à messages 13. Au cours de l'une des scrutations périodiques (22) de la boîte à messages 13 par le bloc d'émission 11 du télécopieur d'émission 14, le bloc d'émission 11 trouve le compte-rendu et le récupère en le transférant (26) de la boîte à messages 13 au télécopieur 14. Dans le télécopieur 14, le compte-rendu est imprimé sur une feuille support mais pourrait également être stocké dans la mémoire de télécopie 7.

Dans une variante plus perfectionnée de l'invention, le protocole de réception comprend une étape supplémentaire pour transférer et stocker l'avertissement et le message correspondant dans la boîte à messages de réception 13', après leur réception dans le télécopieur de réception 14'.

Le clavier de saisie 3' du télécopieur de réception 14' comprend dans ce cas une touche de sélection de ce transfert dans la boîte à messages 13'.

Un utilisateur du télécopieur de réception peut ainsi prendre connaissance à distance des messages qu'il a reçus, en consultant (31) sa boîte à messages 13' sur le réseau de l'Internet 101 depuis un poste distant 30.

On pourrait également envisager de transférer et de stocker les avertissements et les messages correspondants dans la boîte à messages de réception 13' automatiquement dès que la mémoire de télécopie 7' du télécopieur 14' est pleine.

Dans la description qui vient d'être faite, le télécopieur 14' comprend une mémoire de télécopies 7'. Il pourrait être prévu plusieurs mémoires de télécopies respectivement associées à plusieurs boîtes à messages sur le réseau de l'Internet.

Au lieu de transmettre le compte-rendu de réception vers la boîte à messages 13 du télécopieur d'émission 14 via le réseau de l'Internet, on pourrait également envisager d'émettre le compte-rendu directement vers le télécopieur d'émission 14, via le réseau RTC de transmission directe, sous la forme d'un document de télécopie ne nécessitant qu'une communication de courte durée ou sous la forme d'un message écrit court avec notification de l'appelé, transmis à l'aide d'un service supplémentaire du réseau direct, en l'espèce le service CLASS.

Il pourrait également être prévu de transmettre l'avertissement de transmission de la télécopie vers le télécopieur de destination sous la forme d'un message écrit court transmis à l'aide du service CLASS, via le réseau RTC.

Enfin, à la place du réseau de transmission RTC on pourrait envisager tout autre réseau de transmission directe tel que le réseau RNIS ou un réseau radiotéléphonique du type GSM.

Dans le cas du réseau de radiotéléphonie GSM, le service de transmission de message écrit serait le service SMS.

En cas de non-réception en retour de compte-rendu de réception, il peut être prévu que le télécopieur (14) réitère la transmission de la télécopie, par repli sur le réseau RTC 100, ce qui permet de pallier une perte de la première transmission économique à travers le réseau de l'INTERNET 101 ou un oubli de la consultation de la boîte à messages 13' par le destinataire.

Un compte-rendu d'émission, ou une entrée supplémentaire dans un journal d'émission, peut en outre être élaboré dans le télécopieur d'émission 14 et imprimé en y intégrant l'adresse, dans le réseau de l'INTERNET, du télécopieur 14' c'est-à-dire de sa boîte à messages 13'.

Dans le cas où l'adresse de la boîte 13' n'est pas connue du télécopieur d'émission 14, celui-ci appelle le télécopieur 14' de façon classique par le RTC 100. Il est ici prévu que le télécopieur appelé 14' fournisse alors en retour, spontanément ou sur demande, lors des échanges initiaux d'informations entre télécopieurs, une information indiquant qu'il dispose d'une boîte à messages (13'), ou qu'il fournisse directement l'adresse de celle-ci. Cette information peut être transmise au moyen de signaux spécifiques ou par des extensions des trames normalisées DIS, NSF, DCS et NSS de la norme T30 de l'OSI. Le télécopieur d'émission 14 peut alors mettre à jour un annuaire par écriture de cette adresse du télécopieur correspondant 14'. Le même processus peut de même intervenir au niveau du télécopieur appelé 14', auquel le télécopieur appelant 14 fournit, à titre d'information, sa propre adresse INTERNET. Les caractéristiques techniques, ou capacités télécopie, de transmission de chaque télécopieur (14, 14') peuvent de même être mémorisées dans l'annuaire de l'autre (14', 14).

Le télécopieur d'émission 14 (et de réception 14') peut alors émettre, vers l'autre télécopieur, les télécopies suivantes à travers l'INTERNET 101 d'après l'adresse INTERNET (13', 13) de l'autre télécopieur (14', 14), après avoir mémorisé en annuaire les informations ainsi reçues. Ainsi, le télécopieur 14, ou 14', reçoit et mémorise l'adresse INTERNET de l'autre 14', 14 par le RTC 100 et la réémet, pour appeler, sur l'INTERNET 101 la boîte à messages voulue.

Il peut même être prévu que le télécopieur d'émission 14 déroute la transmission de la télécopie vers l'INTERNET 101 dès qu'il reçoit l'adresse de la boîte 13'. En pratique, cela peut consister à rompre la communication à travers le RTC 100, qui ne faisait que débuter, pour la rétablir par l'INTERNET 101. Au passage, le télécopieur appelant 14 aura capté la description complète des capacités télécopie du télécopieur appelé (typiquement à la trame DIS du protocole normalisé sur réseau de transmission directe 100, qui précise les formats, codages, résolutions et autres supportés) et pourra, lors du rétablissement de la communication par l'INTERNET 101, les exploiter. Ceci permet de pallier le fait qu'INTERNET ne permet pas au télécopieur appelé 14' d'indiquer ses capacités et donc obligerait le télécopieur appelant 14 à se replier sur les capacités minimales tacites (capacités de base de la norme T4 de l'UIT). Le télécopieur appelant 14 peut donc ici mémoriser ces capacités dans son annuaire et les exploiter ensuite sur l'INTERNET 101.

D'autre part, le télécopieur appelant 14 peut, lorsqu'il rompt automatiquement la communication à travers le RTC 100, ou lorsqu'il reçoit de son opérateur une telle commande, transmettre au télécopieur appelé 14' une commande de déconnexion, à titre d'indication, pour préciser qu'il rompt la liaison (100) en vue de rappeler par déroutage à travers l'INTERNET 101. Le télécopieur appelé 14' peut exploiter cette indication transmise pour consulter automatiquement sa boîte à messages 13' dans un proche avenir. Cette commande transmise est équivalente à l'avertissement décrit plus haut, mais ici il a lieu avant la communication sur l'INTERNET 101.

## Revendications

1. Procédé de transmission de télécopie entre deux télécopieurs distants (14, 14') dans lequel on relie chaque télécopieur (14, 14') à au moins un réseau de transmission à travers lequel on transmet la télécopie, caractérisé par le fait que l'on relie chaque télécopieur (14, 14') à un réseau de transmission directe (100) et à un réseau de transmission indirecte économique (101) et on transmet de l'un vers l'autre des télécopieurs ladite télécopie (20) et un avertissement (21) de transmission de ladite télécopie respectivement à travers le réseau de transmission indirecte (101) et à travers le réseau de transmission directe (100).

2. Procédé selon la revendication 1, dans lequel, côté réception, après réception de l'avertissement, on consulte des moyens intermédiaires (13') de transmission de télécopie afin de vérifier si la télécopie annoncée a été reçue dans les moyens intermédiaires de transmission (13').

3. Procédé selon la revendication 2, dans lequel, côté réception, après réception de la télécopie annoncée dans les moyens intermédiaires de transmission (13'), on transfère ladite télécopie des moyens intermédiaires de transmission (13') au télécopieur (14').

4. Procédé selon l'une des revendications 2 et 3, dans lequel, côté réception, après réception de la télécopie annoncée, on stocke ladite télécopie dans les moyens intermédiaires de transmission (13').

5. Procédé selon l'une des revendications 2 à 4, dans lequel, côté réception, après réception de la télécopie annoncée, on émet (25) un compte-rendu de réception de ladite télécopie vers le télécopieur d'émission (14) à travers le réseau de transmission indirecte (101).

6. Procédé selon la revendication 5, dans lequel, côté émission, après émission de la télécopie, on consulte des moyens intermédiaires de transmission (13) afin de s'assurer de la réception dudit compte-rendu.

7. Procédé selon la revendication 6, dans lequel le télécopieur d'émission (14) réitère la transmission de la télécopie, par repli sur le réseau de transmission directe (100), en cas de non-réception du compte-rendu après une durée déterminée suivant l'émission.

8. Procédé selon l'une des revendications 1 à 7, dans lequel le télécopieur d'émission (14) appelant l'autre télécopieur (14'), à travers le réseau de transmission directe (100), ce dernier émet en retour une adresse (13') de réception de messages dans le réseau de transmission indirecte (101) et le télécopieur d'émission (14) transmet les télécopies suivantes à ladite adresse (13').

9. Procédé selon la revendication 8, dans lequel le télécopieur d'émission (14) déroute la transmission de la télécopie vers le réseau de transmission indirecte (101) dès qu'il reçoit l'adresse (13').

10. Procédé selon la revendication 9, dans lequel le télécopieur d'émission (14) transmet l'avertissement, à l'autre télécopieur (14'), avant le déroutage.

11. Procédé selon l'une des revendications 8 à 10, dans lequel on met à jour un annuaire d'un au moins des télécopieurs (14; 14') par écriture de l'adresse (13'; 13) de l'autre télécopieur (14'; 14).

12. Procédé selon l'une des revendications 9 à 11, dans lequel le télécopieur d'émission (14) interroge, avant déroutement, l'autre télécopieur (14') sur ses caractéristiques de transmission et les mémorise dans un annuaire pour adapter son émission après déroutement.

13. Procédé selon l'une des revendications 1 à 12, dans lequel on élabore, dans le télécopieur d'émission (14), un journal ou compte-rendu d'émission en y intégrant une adresse (13'), dans le réseau de transmission indirecte (101), du télécopieur appelé (14').

14. Télécopieur pour la mise en oeuvre du procédé de la revendication 1, caractérisé par le fait qu'il comprend un bloc de réception (12) pourvu de moyens de réception d'un avertissement de transmission de télécopie reliés à un réseau de transmission directe (100) et de moyens de consultation de moyens intermédiaires de transmission (13) reliés à un réseau de transmission indirecte (101), et un bloc d'émission (11) pour émettre vers un télécopieur distant des avertissements de transmission de télécopie et lesdites télécopies annoncées, relié au réseau de transmission directe (100) et au réseau de transmission indirecte (101).

15. Télécopieur selon la revendication 14, dans lequel le bloc de réception (12) est agencé pour récupérer chaque télécopie reçue dans les moyens intermédiaires de transmission (13, 13').

16. Télécopieur selon l'une des revendications 14 et 15, dans lequel le bloc de réception (12) est agencé pour émettre un compte-rendu de réception vers le télécopieur (14, 14') d'émission de la télécopie annoncée à travers le réseau de transmission indirecte (101).

17. Télécopieur selon l'une des revendications 14 à 16, agencé pour recevoir et mémoriser dans un annuaire une adresse (13') dans le réseau à transmission indirecte (101), fournie par l'autre télécopieur (14'), à travers le réseau à transmission directe (100), et agencé pour réémettre ladite adresse (13') sur le réseau à transmission indirecte (101).

## Claims

1. Process of facsimile transmission between two remote facsimile machines (14, 14') wherein each facsimile machine (14, 14') is connected to at least one transmission network via which the facsimile is transmitted, **characterised in that** each facsimile machine (14, 14') is connected to a direct transmission network (100) and to a low-cost indirect transmission network (101), and the said facsimile (20) and an alarm (21) announcing transmission of the said facsimile are transmitted from one to the other of the facsimile machines via the indirect transmission network (101) and the direct transmission network (100) respectively.

2. Process according to claim 1, wherein, on the receiving side, after reception of the alarm, intermediate means (13') for facsimile transmission are consulted in order to check if the facsimile announced has been received in the intermediate transmission means (13').

3. Process according to claim 2, wherein, on the receiving side, after reception of the announced facsimile in the intermediate transmission means (13'), the said facsimile is transferred from the intermediate transmission means (13') to the facsimile machine (14').

4. Process according to one of claims 2 and 3, wherein, on the receiving side, after reception of the announced facsimile, the said facsimile is stored in the intermediate transmission means (13').

5. Process according to one of claims 2 to 4, wherein, on the receiving side, after reception of the announced facsimile, a reception report for the said facsimile is transmitted (25) to the transmitting facsimile machine (14) via the indirect transmission network (101).

6. Process according to claim 5, wherein, on the transmission side, after transmission of the facsimile, intermediate transmission means (13) are consulted in order to ascertain that the said report has been received.

7. Process according to claim 6, wherein the transmitting facsimile machine (14) repeats the transmission of the facsimile by reverting to the direct transmission network (100) in the case where the report is not received after a certain period following the transmission.

8. Process according to one of claims 1 to 7, wherein, the transmitting facsimile machine (14) calling the other facsimile machine (14') via the direct transmission network (100), this direct transmission network sends back an address (13') for reception of messages in the indirect transmission network (101) and the transmitting facsimile machine (14) transmits the following facsimiles to the said address (13').

9. Process according to claim 8, wherein the transmitting facsimile machine (14) deviates the transmission of the facsimile to the indirect transmission network (101) when it receives the address (13').

10. Process according to claim 9, wherein the transmitting facsimile machine (14) transmits the alarm to the other facsimile machine (14') before the deviation.

11. Process according to one of claims 8 to 10, wherein a directory of at least one of the facsimile machines (14;14') is updated by writing the address (13'; 13) of the other facsimile machine (14'; 14).

12. Process according to one of claims 9 to 11, wherein, before the deviation, the transmitting facsimile machine (14) interrogates the other facsimile machine (14') as to its transmission features and stores them in a directory in order to adapt its transmission after the rerouting.

13. Process according to one of claims 1 to 12, wherein, in the transmitting facsimile machine (14), a transmission record or report is compiled including therein an address (13') of the called facsimile machine (14') in the indirect transmission network (101).

14. Facsimile machine for implementation of the process of claim 1, **characterised in that** it comprises a reception unit (12) provided with means for receiving a facsimile-transmission alarm, connected to a direct transmission network (100) and means for consultation of intermediate transmission means (13) connected to an indirect transmission network (101), and a transmission unit (11) to transmit alarms announcing facsimile transmission and the said announced facsimiles to a remote facsimile machine connected to the direct transmission network (100) and to the indirect transmission network (101).

15. Facsimile machine according to claim 14, wherein the reception unit (12) is arranged to recover each facsimile received in the intermediate transmission means (13, 13').

16. Facsimile machine according to one of claims 14 and 15, wherein the reception unit (12) is arranged to transmit a reception report to the facsimile machine (14, 14') transmitting the announced facsimile via the indirect transmission network (101).

17. Facsimile machine according to one of claims 14 to 16, arranged to receive and store, in a directory, an address (13') in the indirect transmission network (101) provided by the other facsimile machine (14') via the direct transmission network (100), and arranged to retransmit the said address (13') on the indirect transmission network (101).

## Patentansprüche

1. Verfahren zum Übertragen einer Telekopie zwischen zwei beabstandeten Telekopierern (14, 14'), wobei jeder Telekopierer (14, 14') mit mindestens einem Übertragungsnetz verbunden ist, durch welches hindurch die Telekopie übertragen wird,
**dadurch gekennzeichnet**, dass
jeder Telekopierer (14, 14') mit einem Netz zur direkten Übertragung (100) und mit einem Netz zur ökonomischen indirekten Übertragung (101) verbunden wird und dass von dem einen an den anderen, der Telekopierer die Telekopie (20) und eine Meldung (21) über die Übertragung der Telekopie jeweils durch das indirekte Übertragungsnetz (101) und durch das direkte Übertragungsnetz (100) hindurch übertragen wird.

2. Verfahren nach Anspruch 1,
wobei auf Empfängerseite nach Empfang der Meldung eine Zwischeneinrichtung (13') zur Übertragung der Telekopie abgefragt wird, um zu überprüfen, ob die gemeldete Telekopie in der Übertragungszwischeneinrichtung (13') empfangen wurde.

3. Verfahren nach Anspruch 2,
wobei auf Empfängerseite nach Empfang der gemeldeten Telekopie in der Übertragungszwischeneinrichtung (13') die Telekopie von der Übertragungszwischeneinrichtung (13') an den Telekopierer (14') übertragen wird.

4. Verfahren nach Anspruch 2 oder 3,
wobei auf Empfängerseite nach Empfang der gemeldeten Telekopie diese in der Übertragungszwischeneinrichtung (13') gespeichert wird.

5. Verfahren nach einem der Ansprüche 2 bis 4,
wobei auf Empfängerseite nach Empfang der gemeldeten Telekopie (25) ein Bericht über den Empfang der Telekopie an den Sendetelekopierer (14) durch das indirekte Übertragungsnetz (101) hindurch gesendet wird.

6. Verfahren nach Anspruch 5,
wobei auf der Seite des Senders nach dem Senden der Telekopie eine Übertragungszwischeneinrichtung (13) abgefragt wird, um sich von dem Empfang des Berichts zu überzeugen.

7. Verfahren nach Anspruch 6,
wobei der Sendetelekopierer (14), im Fall des Nichtempfangs des Berichts nach einer bestimmten Dauer nach dem Senden, die Übertragung der Telekopie durch Rückführung an das direkte Übertragungsnetz (100) wiederholt.

8. Verfahren nach einem der Ansprüche 1 bis 7,
wobei der Sendetelekopierer (14) den anderen Telekopierer (14') durch das direkte Übertragungsnetz (100) anruft, wobei dieses Letztgenannte eine Adresse (13') für den Empfang von Meldungen im indirekten Übertragungsnetz (131) zurücksendet und der Sendetelekopierer (14) die folgenden Telekopien an die Adresse (13') überträgt.

9. Verfahren nach Anspruch 8,
wobei der Sendetelekopierer (14) die Übertragung der Telekopie an das indirekte Übertragungsnetz (101) umleitet, sobald er die Adresse (13') empfängt.

10. Verfahren nach Anspruch 9,
wobei der Sendetelekopierer (14) die Meldung vor der Umleitung an den anderen Telekopierer (14') überträgt.

11. Verfahren nach einem der Ansprüche 8 bis 10,
wobei ein Verzeichnis von mindestens einem der Telekopierer (14', 14) durch Schreiben der Adresse (13', 13) des anderen Telekopierers (14', 14) aktualisiert wird.

12. Verfahren nach einem der Ansprüche 9 bis 11,
wobei der Sendetelekopierer (14) vor dem Umleiten den anderen Telekopierer (14') hinsichtlich seiner Übertragungsmerkmale abfragt und sie in einem Verzeichnis speichert, um seine Sendung nach der Umleitung anzupassen.

13. Verfahren nach einem der Ansprüche 1 bis 12,
wobei im Sendetelekopierer (14) ein Journal oder ein Sendebericht erzeugt wird, indem dort eine Adresse (13') im indirekten Übertragungsnetz (101) des angerufenen Telekopierers (14') integriert wird.

14. Telekopierer zum Ausführen des Verfahrens nach Anspruch 1,
**dadurch gekennzeichnet**, dass
er einen Empfangsblock (12) aufweist, der mit einer Einrichtung für den Empfang einer Meldung der Übertragung einer Telekopie versehen ist, die mit einem direkten Übertragungsnetz (100) verbunden ist, und der ein Mittel zum Abfragen der Übertragungszwischeneinrichtung (13) aufweist, das mit einem indirekten Übertragungsnetz (101) verbunden ist, und dass er einen Sendeblock (11) umfasst, um an einen beabstandeten Telekopierer, der mit dem direkten Übertragungsnetz (100) und dem indirekten Übertragungsnetz (101) verbunden ist, Meldungen von der Übertragung einer Telekopie und die gemeldeten Telekopien zu senden.

15. Telekopierer nach Anspruch 14,
wobei der Empfangsblock (12) angeordnet ist, um jede in den Übertragungszwischeneinrichtungen (13, 13') empfangene Telekopie zurückzugewinnen.

16. Telekopierer nach Anspruch 14 oder 15,
wobei der Empfangsblock (12) angeordnet ist, um einen Empfangsbericht der gemeldeten Telekopie durch das indirekte Übertragungsnetz hindurch an den Sendetelekopierer (14, 14') zu senden.

17. Telekopierer nach einem der Ansprüche 14 bis 16,
der angeordnet ist, um in einem Verzeichnis eine Adresse (13') in dem indirekten Übertragungsnetz (101) zu empfangen und zu speichern, die durch den anderen Telekopierer (14') durch das direkte Übertragungsnetz (100) hindurch bereitgestellt worden ist, und der angeordnet ist, um die Adresse (13') am indirekten Übertragungsnetz (101) wiederauszustrahlen.
